# EUROPÄISCHE PATENTSCHRIFT

(11) **EP 3 894 968 B1**
(45) Veröffentlichungstag und Bekanntmachung des Hinweises auf die Patenterteilung: **06.11.2024**
(21) Anmeldenummer: 19823890.9
(22) Anmeldetag: 09.12.2019
(51) Int. Cl.: G05B 19/19, G01M 15/02, G01M 17/00

(54) **VERFAHREN ZUM DURCHFÜHREN EINES PRÜFLAUFS AUF EINEM PRÜFSTAND**
METHOD FOR PERFORMING A TEST RUN ON A TEST STAND
PROCÉDÉ POUR EXÉCUTER UN CYCLE D'ESSAI SUR UN BANC D'ESSAI

(30) Priorität: 10.12.2018 AT 510932018
(43) Veröffentlichungstag der Anmeldung: 20.10.2021
(73) Patentinhaber: AVL List GmbH, 8020 Graz (AT)
(72) Erfinder: KURAL, Emre, 8020 Graz (AT); FLECK, Andreas, 2344 Maria Enzersdorf (AT)
(74) Vertreter: Patentanwälte Pinter & Weiss OG
(86) Internationale Anmeldenummer: PCT/AT2019/060423
(87) Internationale Veröffentlichungsnummer: WO 2020/118331

(56) Entgegenhaltungen:
- US-A1- 2011 066 291
- US-A1- 2011 066 291
- KUPERMAN A ED - KARATZA HELEN ET AL: "Testing motion controllers robustness by emulating electrical and mechanical parameter variations of motor drives", SIMULATION MODELLING PRACTICE AND THEORY, ELSEVIER, AMSTERDAM, NL, vol. 19, no. 9, 20 April 2011 (2011-04-20), pages 1783 - 1794, XP028251957, ISSN: 1569-190X, [retrieved on 20110429], DOI: 10.1016/J.SIMPAT.2011.04.011
- DANIEL COLLINS: "How are servo system velocity control loops tuned?", 6 June 2017 (2017-06-06), XP055672868, Retrieved from the Internet <URL:https://web.archive.org/web/20170606142648/http://www.motioncontroltips.com/how-are-servo-system-velocity-control-loops-tuned/> [retrieved on 20200302]
- SHUGANG JIANG: "Development of an Engine-in-the-loop Vehicle Simulation System in Engine Dynamometer Test Cell", SAE TECHNICAL PAPER SERIES, vol. 1, 20 April 2009 (2009-04-20), 400 Commonwealth Drive, Warrendale, PA, United States, XP093163045, Retrieved from the Internet <URL:https://www.aandd.jp/support/dsp_papers/2009-01-1039.pdf> DOI: 10.4271/2009-01-1039
- KUPERMAN A ED - KARATZA HELEN ET AL: "Testing motion controllers robustness by emulating electrical and mechanical parameter variations of motor drives", SIMULATION MODELLING PRACTICE AND THEORY, ELSEVIER, AMSTERDAM, NL, vol. 19, no. 9, 20 April 2011 (2011-04-20), pages 1783 - 1794, XP028251957, ISSN: 1569-190X, [retrieved on 20110429], DOI: 10.1016/J.SIMPAT.2011.04.011
- DANIEL COLLINS: "How are servo system velocity control loops tuned?", 6 June 2017 (2017-06-06), XP055672868, Retrieved from the Internet <URL:https://web.archive.org/web/20170606142648/http://www.motioncontroltips.com/how-are-servo-system-velocity-control-loops-tuned/> [retrieved on 20200302]

## Beschreibung

Die gegenständliche Erfindung betrifft ein Verfahren zum Durchführen eines Prüflaufs auf einem Prüfstand mit einem Prüfling wobei einer Simulationseinheit von einer Referenzeinheit eine Anzahl Referenzwerte vorgegeben wird, wobei durch die Simulationseinheit unter Verwendung der Anzahl Referenzwerte eine Anzahl Simulationswerte simuliert wird, wobei aus der Anzahl Simulationswerte zumindest eine Sollgröße und weiter zumindest eine Steuergröße zum Steuern des Prüflings ermittelt wird.

Weiters betrifft die gegenständliche Erfindung einen Prüfstand mit einem Prüfling zum Durchführen eines Prüflaufs, wobei eine Referenzeinheit vorgesehen ist, die einer Simulationseinheit eine Anzahl Referenzwerte vorgibt, wobei die Simulationseinheit ausgestaltet ist unter Verwendung der Anzahl Referenzwerte eine Anzahl Simulationswerte zu simulieren und aus der Anzahl Simulationswerte zumindest eine Sollgröße zu ermitteln und an eine Steuereinheit zu übermitteln, wobei die Steuereinheit ausgestaltet ist basierend auf der zumindest einen Sollgröße zumindest eine Steuergröße zum Steuern des Prüflings vorzugeben

Die Veröffentlichung "Development of an Engine-in-the-loop Vehicle Simulation System in Engine Dynamometer Test Cell", Jiang, S. et al., SAE World Congress & Exhibition, 2009, offenbart ein Engine-in-the-loop Prüfsystem.

Es gibt gesetzliche Vorgaben für zulässige Schadstoffemissionen von Fahrzeugen (insbesondere CO₂, CO, NOₓ und Partikelanzahl), z.B. die Verordnung (EG) Nr. 715/2007 des Europäischen Parlaments und des Rates, in der der Euro 5 und Euro 6 Standard definiert sind. Die Einhaltung dieser gesetzlichen Vorgaben durch Fahrzeuge wird bisher mittels standardisierter Testzyklen (wie z.B. dem New European Driving Cycle (NEDC)) auf Prüfständen überprüft. Dazu wird das während des Testzyklus erzeugte Abgas am Prüfstand entnommen und untersucht. Das Problem hierbei ist, dass die Bedingungen am Prüfstand unter dem standardisierten Testzyklus mit den realen Verhältnissen, wenn das Fahrzeug auf einer realen Strecke bewegt wird, nicht vergleichbar sind. Damit kann ein Fahrzeug zwar die gesetzliche Vorgabe am Prüfstand einhalten, aber diese im realen Betrieb trotzdem überschreiten.

Um dem vorzubeugen gibt es das Bestreben des Gesetzgebers, die Überprüfung der vorgegebenen Schadstoffemissions-Grenzwerte vom Prüfstand auf die reale Straße zu verlagern. Das erfordert es, dass die Schadstoffemissionen während einer realen Fahrt des Fahrzeugs auf einer realen Strecke mit Portable Emission Measurement Systems (PEMS) gemessen und überprüft werden. Es gibt damit keinen standardisierten Testzyklus mehr, weil eine Fahrt auf einer öffentlichen Straße mit normalem Verkehr immer zufälligen Einflüssen unterliegt. Das Ziel des Gesetzgebers dabei ist, dass ein Fahrzeug die Grenzwerte der Schadstoffemissionen unter normalen Betriebsbedingungen, und nicht nur am Prüfstand, einhält. Auch für die Auswertung der Schadstoffemissionen nach der Testfahrt werden vom Gesetzgeber Vorgaben gemacht, z.B. die Verwendung bestimmter Datenanalysewerkzeuge.

Der Gesetzgeber definiert dazu eine Real Driving Emissions (RDE) Testprozedur. Darin sind nur mehr bestimmte Vorgaben für die Fahrzeugmasse, die Umgebungstemperatur und die geographische Höhe, unter der die Testfahrt stattfinden muss vorgegeben. Zusätzlich wird noch definiert, zu welchen Anteilen verschiedene Fahrsituationen in der Testprozedur enthalten sein müssen, beispielsweise 33% ± 10% Aufteilung auf Stadt, Land und Autobahn aber zumindest jeweils 16km, Fahrzeuggeschwindigkeit Land im Bereich von 60 - 90 km/h, Länge der Testfahrt 90 - 120 min, usw. Nachdem diese Überprüfung auf einer öffentlichen Straße stattfinden soll, unterliegt die jeweilige Testfahrt auch zufälligen Einflüssen, wie beispielsweise Fremdverkehr, Positionierungen und Schaltphasen von Ampeln, usw. Daraus ist unmittelbar erkennbar, dass eine reale Testfahrt nicht reproduzierbar ist, sondern jeweils eine mehr oder weniger zufällige Ereigniskette darstellt.

Dieser Paradigmenwechsel hat auch unmittelbaren Einfluss auf die Fahrzeughersteller beim Entwickeln neuer Fahrzeuge und insbesondere neuer Motoren. Bisher konnte jeder Entwicklungsschritt mittels der standardisierten Testzyklen am Prüfstand überprüft werden. Dazu musste lediglich der jeweilige Prüfling nach jedem Entwicklungsschritt dem Testzyklus unterworfen werden und die Schadstoffemissionen untersucht werden. Das geht nun mit der neuen RDE Testprozedur nicht mehr, da grundsätzlich nicht vorhersagbar ist, ob ein neu entwickeltes Fahrzeug am Ende der Entwicklung die RDE Testprozedur durch Einhaltung der Grenzwerte der Schadstoffemissionen übersteht. Erst das fertige Fahrzeug kann auf der realen Straße bewegt werden, d.h. es kann erst ganz zum Schluss der Entwicklung die RDE Testprozedur durchgeführt werden. Wenn das Fahrzeug dieser Überprüfung nicht standhält, hätte das nachvollziehbar enorme Auswirkungen auf den Fahrzeughersteller, der im Extremfall eine jahrelange Entwicklung unter enormen Kosten und Aufwand zumindest teilweise neu aufrollen müsste.

Die Verwendung der bisherigen standardisierten Testzyklen während der Fahrzeugentwicklung hilft dabei auch nicht weiter, da die Einhaltung der Grenzwerte der Schadstoffemissionen unter Anwendung solcher standardisierter Testzyklen nicht automatisch auch die Einhaltung dieser Grenzwerte unter der RDE Testprozedur sicherstellt.

Man könnte nun alle möglichen Betriebszustände eines Fahrzeugs in einem Testszenario zusammenführen und dieses Testszenario für die Überprüfung jedes Entwicklungsschrittes verwenden. Das ist aber kaum zielführend, da die Umsetzung eines solchen Testszenarios auf einem Prüfstand sehr lange dauern würde, was die Entwicklung verzögern würde, die teuren Prüfstandszeiten erhöhen würde und insgesamt sehr aufwändig wäre. Eine willkürliche Erstellung eines Testszenarios ist ebenfalls nicht zielführend, da damit nicht sichergestellt werden könnte, dass damit die Einhaltung der gesetzlichen Vorgaben unter der RDE Testprozedur erreicht wird.

Dazu kommt noch, dass nicht jedes Fahrmanöver, z.B. Beschleunigung aus einer niedrigen Drehzahl heraus, Überholen auf einer Landstraße, Abbiegen im Stadtverkehr, usw., in jedem Fahrzeug dieselbe Auswirkung auf die Schadstoffemission haben muss. Das bedeutet, dass ein Testszenario für ein bestimmtes Fahrzeug geeignet sein kann, aber für ein anderes Fahrzeug nicht.

Grundsätzlich gilt das Obige in gleicher Weise auch für andere Zielgrößen der Entwicklung eines Fahrzeugs, beispielsweise für den Verbrauch eines Fahrzeugs, obwohl es hierzu keine (zumindest noch keine) gesetzlichen Vorgaben gibt. Der Verbrauch ist aber in der Regel auch ein Entwicklungsziel bei der Entwicklung eines Fahrzeugs, weshalb auch hier das Erreichen des angestrebten Verbrauchs, beispielsweise bei der RDE Testprozedur, angestrebt wird.

So werden für Emissionstests im praktischen Fahrbetrieb während realen Testfahrten die reale Geschwindigkeit und die reale Position eines Fahrzeugs als Referenzgeschwindigkeit und Referenzposition über die Referenzzeit als Referenz für Fahrmanöver aufgezeichnet. Diese Referenzwerte werden während einer Simulationseinheit auf einem Prüfstand von einer Referenzeinheit zur Verfügung gestellt und können vor der Durchführung der Simulation auch aufbereitet werden. Es können die Referenzwerte variiert werden und/oder Worst-Case-Szenarios dargestellt werden. Wird die Simulation auf einem Prüfstand abgewickelt, können bestimmte Teile des Fahrzeugmodells, z. B. der Motor oder ein Antriebsstrang, auch durch entsprechende Teile auf dem Prüfstand ersetzt werden.

Eine Simulation eines Fahrzeugs weist drei grundlegende Bausteine auf: die simulierte Strecke, das simulierte Fahrzeug und der simulierte Fahrer. Der simulierte Fahrer steuert das simulierte Fahrzeug entlang der simulierten Strecke mit einer Simulationsgeschwindigkeit, die der vorgegebenen Referenzgeschwindigkeit entsprechen sollte. Hierzu kann sich der simulierte Fahrer an die Referenzzeit, oder an die Referenzposition halten. Dabei können leichte Abweichungen der Simulationsgeschwindigkeit von der Referenzgeschwindigkeit jedoch nicht verhindert werden. Die simulierte Strecke kann auch die Eigenschaften der Umgebung, wie Temperatur, Luftdruck, Wind, "gegnerischen" Verkehr, wie z.B. andere Fahrzeuge, etc., umfassen.

Wird die Simulationsgeschwindigkeit auf Basis der Referenzzeit vorgegeben, so werden leichte Abweichungen der Simulationsgeschwindigkeit von der Referenzgeschwindigkeit eine akkumulierte Abweichung der Simulationsposition von der Referenzposition bewirken. Liegt während einer Simulation beispielsweise nach einer gewissen Dauer an einer Referenzposition von 80 km eine akkumulierte Positionsabweichung von 20 m vor, so hat diese Simulationsposition von 80 km und einem Meter einen relativen Fehler von nur 0,025%. Soll das Fahrzeug auf einem steilen Hügel stoppen (d.h.

Simulationsgeschwindigkeit Null), beispielsweise um Emissionen während eines Bergstarts zu testen, so würde sich das simulierte Fahrzeug bei einer vermeintlichen Referenzposition von 80km bereits bei einer Simulationsposition von 80 km und 20 m befinden. Liegt diese Simulationsposition an einem Ort der Strecke, an dem keine Neigung vorhanden ist, so würde ein simulierter Stopp und Start des Fahrzeugs also zu verfälschten Ergebnissen, insbesondere hinsichtlich einer Emissionsmessung, führen.

Wird die Simulationsgeschwindigkeit auf Basis der Referenzposition vorgegeben, so ergeben leichte Abweichungen der Simulationsgeschwindigkeit von der Referenzgeschwindigkeit eine Abweichung der Simulationszeit von der Referenzzeit. Wird beispielsweise erst eine Referenz-Geschwindigkeit von 130 km/h vorgegeben und daraufhin zu einer bestimmten Referenzzeit, die Referenzgeschwindigkeit auf 40 km/h reduziert, beispielsweise aufgrund einer scharfen Kurve einer Autobahnausfahrt, und weicht die Simulationszeit um einige Sekunden von der Referenzzeit ab, so würde dies zu einer Geschwindigkeit von 130 k/m während der scharfen Kurve führen. Dies könnte wiederum zu Problemen bei der Simulation oder Reproduktion führen, beispielsweise aufgrund sehr hoher, falsch simulierter, Seitenbeschleunigungen. Zudem kann bei einer positionsabhängigen Simulationsgeschwindigkeit nach einem Stopp an einer bestimmten Referenzposition kein Start erfolgen, die Simulation bleibt also hängen.

Eine zeitbasierte Bestimmung einer Simulationsgeschwindigkeit ruft also Abweichungen der Simulationsposition von der Referenzposition hervor, eine positionsbasierte Bestimmung der Simulationsgeschwindigkeit Abweichungen der Simulationszeit von der Referenzzeit.

Es ist daher eine Aufgabe der gegenständlichen Erfindung ein Verfahren und einen Prüfstand anzugeben, wobei eine Simulation ermöglicht wird, bei der oben genannte Probleme vermieden werden. Der Gegenstand, für den Schutz begehrt wird, wird in den Patentansprüchen angegeben.

Diese Aufgabe wird erfindungsgemäß gelöst, indem von einer Detektionseinheit eine Abweichung eines Vergleichssimulationswerts aus der Anzahl Simulationswerte von einem Vergleichsreferenzwert aus der Anzahl Referenzwerte, vorzugsweise um eine Toleranz, festgestellt wird, bei einer festgestellten Abweichung x von einer Korrektureinheit ausgehend von einem ausgewählten Referenzwert aus der Anzahl Referenzwerte ein korrigierter Referenzwert ermittelt wird, der Simulationseinheit statt dem ausgewählten Referenzwert der korrigierte Referenzwert zur Simulation eines korrigierten Simulationswerts vorgegeben wird, wodurch die Abweichung reduziert wird, und die zumindest eine Sollgröße unter Verwendung des korrigierten Simulationswert ermittelt wird.

Die Aufgabe wird ebenso durch einen Prüfstand gelöst auf dem eine Detektionseinheit vorgesehen ist, die ausgestaltet ist eine Abweichung eines Vergleichssimulationswerts aus der Anzahl Simulationswerte von einem Vergleichsreferenzwert aus der Anzahl Referenzwerte, vorzugsweise um eine Toleranz, festzustellen, wobei eine Korrektureinheit vorgesehen ist, die ausgestaltet ist bei einer festgestellten Abweichung ausgehend von einem ausgewählten Referenzwert aus der Anzahl Referenzwerte einen korrigierten Referenzwert zu ermitteln und der Simulationseinheit statt dem ausgewählten Referenzwert zur Simulation eines korrigierten Simulationswerts vorzugeben, wodurch die Abweichung reduziert und die zumindest eine Sollgröße unter Verwendung des korrigierten Simulationswert ermittelt wird.

Es erfolgt also erst ein Vergleich eines Vergleichssimulationswerts mit einem Vergleichsreferenzwert, welcher zum Vergleichssimulationswert äquivalent ist, d.h. es wird beispielsweise eine Simulationsposition mit einer Referenzposition verglichen. Natürlich können auch mehrere Vergleichssimulationswerte mit zugehörigen Vergleichsreferenzwerten verglichen werden, um jeweils Abweichungen festzustellen. Wird eine Abweichung zwischen dem Vergleichssimulationswert und dem zugehörigen Vergleichsreferenzwert festgestellt, so wird erfindungsgemäß nicht der Vergleichssimulationswert selbst geändert, sondern ein ausgewählter Referenzwert aus der Anzahl Referenzwerte durch einen korrigierten Referenzwert ersetzt, wobei der ausgewählte Referenzwert erfindungsgemäß nicht dem Vergleichsreferenzwert entspricht. Da die Simulationseinheit nun auf Basis des korrigierten Referenzwerts anstelle des (unkorrigierten) Simulationswerts einen korrigierten Simulationswert berechnet, wird in Folge die Abweichung reduziert. Damit wird die zumindest eine Sollgröße unter Verwendung des korrigierten Simulationswerts ermittelt, womit die zumindest eine Sollgröße ebenso korrigiert ist.

Somit kann das Verfahren, bzw. die Detektionseinheit, bzw. Korrektureinheit auch in einen bestehenden Prüfstand integriert werden. Der ausgewählte Referenzwert, welcher zuvor der Simulationseinheit von der Referenzeinheit zur Verfügung gestellt wurde, wird auf einen korrigierten Referenzwert geändert, welcher dann der Simulationseinheit statt dem ursprünglichen ausgewählten Referenzwert zur Verfügung gestellt wird. Das Verfahren muss also nicht am Prüfstand integriert sein, sondern kann auch nachträglich nachgerüstet werden, indem eine entsprechende Detektionseinheit bzw. Korrektureinheit zwischen Referenzeinheit und Simulationseinheit geschaltet wird. Da lediglich der ausgewählte Referenzwert durch einen korrigierten Referenzwert ersetzt wird, kann das Verfahren auf allen Prüfständen Verwendung finden, bei welchen eine Simulationseinheit in derartiger Weise eine Anzahl Referenzwerte von einer Referenzeinheit vorgegeben bekommt. Das Verfahren kann auch während einer laufenden Simulation aktiviert werden um eine Abweichung zu verringern oder zu eliminieren. So ist eine Aktivierung des Verfahrens auf Prüfständen, bzw. ein Einbinden der Korrektureinheit in Prüfständen, die Simulationseinheiten mit komplexeren Fahrermodellen, die beispielsweise vorausschauende Informationen, wie Geschwindigkeits- und Neigungsinformationen erfordern, möglich.

Es kann auch eine weitere Sollgröße für zumindest eine mit dem Prüfling verbundene Belastungsmaschine unter Verwendung des korrigierten Simulationswerts vorgegeben werden.

Das erfindungsgemäße Verfahren kann in einem oder mehreren Zyklus des Prüflaufs durchgeführt werden.

Vorteilhafterweise kann der korrigierte Referenzwert kontinuierlich erhöht oder verringert werden, womit eine rasche Reduktion der Abweichung zwischen Vergleichssimulationswert und Vergleichsreferenzwert erfolgen kann, ohne Sprünge des ausgewählten Referenzwerts vorzusehen. Damit wird das erfindungsgemäße Verfahren in mehreren Zyklen des Prüflaufs durchgeführt.

Der korrigierte Referenzwert kann erhöht oder verringert werden, bis keine Abweichung mehr auftritt. Damit kann erreicht werden, dass der Vergleichssimulationswert dem Vergleichsreferenzwert entspricht.

Vorteilhafterweise wird das Verfahren zu Beginn des Prüflaufs gestartet, womit Abweichungen von Beginn an gering gehalten, bzw. verhindert werden können. Natürlich kann das Verfahren auch gestartet werden, wenn die Simulation bereits fortgeschritten ist und ggf. bereits eine größere Abweichung vorhanden ist. Das Verfahren kann auch im laufenden Betrieb auf dem Prüfstand angewandt werden, beispielsweise um während der Simulation vorgenommene Änderungen, z. B. eine Änderung der Fahrer- oder Getriebewert, auszuwerten, oder auch während eines Prüflaufs mehrmals aktiviert und deaktiviert werden.

Das Verfahren kann während des gesamten Prüflaufs durchgeführt werden, um eine Abweichung gänzlich zu verhindern oder gering zu halten, z.B., innerhalb eines Toleranzbandes. Damit wird das erfindungsgemäße Verfahren in allen Zyklen des Prüflaufs durchgeführt.

Vorzugsweise umfasst die Anzahl Referenzwerte eine Referenzposition zu einer Referenzzeit und eine Referenzgeschwindigkeit zur Referenzzeit, wobei die von der Simulationseinheit simulierte Anzahl Simulationswerte eine Simulationsgeschwindigkeit zu einer Simulationszeit und eine Simulationsposition zur Simulationszeit umfasst. Damit wird also der Simulationseinheit die Referenzgeschwindigkeit zur Referenzzeit von der Referenzeinheit vorgegeben, woraufhin die Simulationseinheit die Simulationsgeschwindigkeit, wie auch eine Simulationsposition zu einer Simulationszeit simuliert.

Es kann die Simulationsposition als Vergleichssimulationswert dienten, die Referenzposition als Vergleichsreferenzwert dienen und die Referenzgeschwindigkeit als ausgewählter Referenzwert dienen.

Weiters kann der Simulationseinheit eine korrigierte Referenzgeschwindigkeit, die geringer als die Referenzgeschwindigkeit ist, vorgegeben werden, wenn die Simulationsposition größer als die Referenzposition ist und die Simulations-Geschwindigkeit eine Geschwindigkeitsschwelle, vorzugsweise Null, überschreitet.

Zudem kann der Simulationseinheit eine korrigierte Referenzgeschwindigkeit, die größer als die Referenzgeschwindigkeit ist, vorgegeben werden, wenn die Simulationsposition kleiner als die Referenzposition ist und die Simulations-Geschwindigkeit eine Geschwindigkeitsschwelle, vorzugsweise Null, überschreitet.

Damit wird die Ortsabweichung der Simulationsposition von der Referenzposition als Abweichung des Vergleichssimulationswerts vom äquivalenten Vergleichsreferenzwert angesehen. Die Referenzgeschwindigkeit (ausgewählter Referenzwert) wird durch eine korrigierte Referenzgeschwindigkeit (korrigierten Referenzwert), welche höher oder geringer als die Referenzgeschwindigkeit ist, ersetzt. Dadurch wird natürlich in weiterer Folge in der Simulationseinheit nicht mehr wie zuvor eine Simulationsposition simuliert, sondern eine korrigierte Simulationsposition (korrigierter Simulationswert), womit die Abweichung reduziert wird. In Folge wird die zumindest eine Sollgröße und weiter die zumindest eine Steuergröße unter Verwendung der korrigierten Simulationsposition vorgegeben.

Vorzugsweise wird die Simulationszeit auf eine korrigierte Simulationszeit verändert, wenn sie von der Referenzzeit abweicht und die Simulationsgeschwindigkeit die Geschwindigkeitsschwelle, vorzugsweise Null, nicht überschreitet. So kann die Simulationszeit beispielsweise beschleunigt oder verlangsamt und damit an die Referenzzeit angepasst werden.

Die Geschwindigkeitsschwelle kann derart gewählt werden, dass eine Änderung der Simulationszeit keinen signifikanten Einfluss auf die Simulation hat. Dies ist insbesondere der Fall, wenn die Geschwindigkeitsschwelle bei Null, im Bereich von Null bis 6 km/h, oder zwischen 3 und 6 km/h liegt, d.h. das Fahrzeug in einer Stopp-Phase still steht, oder sich langsam bewegt. Es wird somit lediglich die Länge dieser Stoppphase angepasst. Damit wird ein Singularitätsproblem gelöst, welches auftritt, wenn lediglich die Simulationsposition angepasst wird, da die Simulationsposition bei einer Simulationsgeschwindigkeit von Null nicht ansteigen kann. Da insbesondere bei RDE-Tests viele Stoppphasen, in denen sich das Fahrzeug nicht bewegt, von der Referenzeinheit vorgegeben werden, können durch eine Änderung der Dauer dieser Stoppphasen durch eine Änderung der Simulationszeit bereits akkumulierte Abweichungen, z.B. Zeitabweichungen und/oder Positionsabweichungen, idealerweise auf Null, reduziert werden. So kann auch eine Positionsabweichung korrigiert werden, indem zuvor eine Zeitabweichung korrigiert wurde.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
- Fig.1a: einen typischen Prüfstandsaufbau für einen Prüfling,
- Fig.1b: eine mögliche Ausführung der Simulationseinheit,
- Fig.2: eine beispielhafte Referenzfahrt,
- Fig.3: eine zeitbasierte Vorgabe der Simulationsgeschwindigkeit,
- Fig.4: eine ortsbasierte Vorgabe der Simulationsgeschwindigkeit,
- Fig.5: einen erfindungsgemäßen Prüfstandsaufbau,
- Fig.6: eine erfindungsgemäße Korrektur der Referenzgeschwindigkeit,
- Fig.7: eine erfindungsgemäße Korrektur der Simulationszeit bei einer Stopp-Phase.

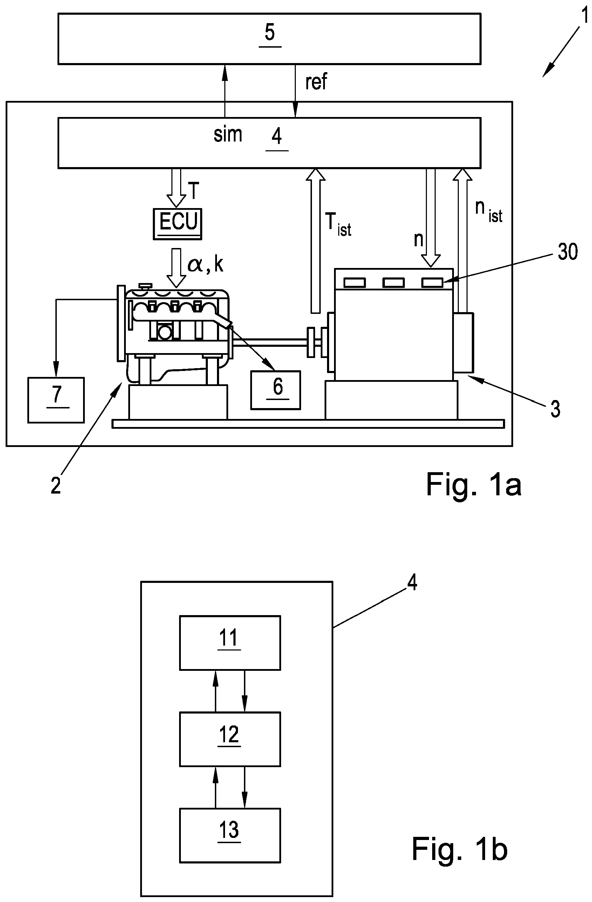

In Fig.1 ist ein typischer Prüfstand 1 für einen Prüfling 2, hier ein Motorprüfstand für einen Verbrennungsmotor, dargestellt. Der Prüfling 2 ist hier mit einer Belastungsmaschine 3 verbunden, beispielsweise über eine Verbindungswelle, wie in Fig.1 angedeutet. Der Prüfling 2 kann aber auch einen Antriebsstrang, ein ganzes Fahrzeug, einzelne oder mehrere Komponenten, wie Getriebe, Batterien, etc. umfassen. Demgemäß kann der Prüfstand 1 beispielsweise einen Antriebsstrangprüfstand oder einen Rollenprüfstand darstellen, wobei auch mehr als eine Belastungsmaschine 3, z.B. je eine pro angetriebener Halbachse oder auch pro Achse, vorgesehen sein kann. Der Prüfling 2 wird dabei am Prüfstand 1 gemäß den Vorgaben eines Prüflaufs betrieben, um Aussagen hinsichtlich bestimmter Messgrößen m des Fahrzeugs zu erhalten, wie z.B. die Schadstoffemission, ein Verbrauch, das akustische Verhalten des Fahrzeugs, die Fahrbarkeit des Fahrzeugs, die Haltbarkeit des Fahrzeugs, Hinweise zur Auslegung/Optimierung einzelner Komponenten, usw. Dabei wird die Messgröße mit einer Zielgröße verglichen. Wenn sich die Messgröße auf die Schadstoffemissionen eines Verbrennungsmotors bzw. den Verbrauch eines Verbrennungsmotors bezieht, umfasst der Prüfling 2 natürlich auch einen Verbrennungsmotor.

Auf einer Simulationseinheit 4 wird ein auf einer Prüfstrecke bewegtes Fahrzeug simuliert. Hierzu wird der Simulationseinheit 4 von einer Referenzeinheit 5 eine Anzahl Referenzwerte ref vorgegeben. Die Simulationseinheit 4 ermittelt im Rahmen der Simulation eine Anzahl Simulationswerte sim. Im der Simulationseinheit 4 aus der Anzahl Simulationswerte sim wiederum zumindest eine Sollgröße T, z.B. ein Drehmoment ermittelt, wobei die zumindest eine Sollgröße T auch einem Simulationswert sim entsprechen kann. Die zumindest eine Sollgröße T kann auch eine Pedalstellung eines Gaspedals darstellen oder aus einer Pedalstellung berechnet werden. Die zumindest eine Sollgröße T wird an eine Steuereinheit ECU übergeben, die Steuereinheit ECU steuert basierend auf der zumindest einen Sollgröße T den Prüfling 2 mit zumindest einer Steuergröße an. Die Steuereinheit ECU, hier als Motorsteuereinheit ausgeführt, kann basierend auf einem zu erzeugenden Drehmoment (Sollgröße T) dem Prüfling 2 eine Drosselklappenstellung α und/oder eine Kraftstoffmenge k (Steuergröße) vorgeben.

Die Simulationseinheit 4 kann auch zumindest eine weitere Sollgröße, z.B. eine Drehzahl n, einer weiterer Steuereinheit 30 zuführen, wobei die weitere Steuereinheit 30 eine Belastungsmaschine 3 steuern kann, wie in Fig. 1 dargestellt. Die tatsächliche Drehzahl der Belastungsmaschine 3 wirkt hier von der Belastungsmaschine 3 über die Welle auf den Prüfling 2.

Auf einem Rollenprüfstand können auch Fahrroboter vorgesehen sein, die gemäß den Vorgaben des durchzuführenden Prüfversuchs die Bedienelemente des Fahrzeugs, wie Gaspedal, Bremspedal, Gangschaltung, betätigen.

Am Prüfstand 1 sind in der Regel auch eine Reihe von (nicht näher dargestellten) Messsensoren vorhanden, mit denen z.B. aktuelle Istwerte des Drehmoments Tᵢₛₜ und der Drehzahl nᵢₛₜ des Prüflings 2 erfasst werden und an die Simulationseinheit 4 übermittelt werden.

Am Prüfstand 1 wird mit einem konkreten Prüfling 2 ein Prüflauf durchgeführt und es werden dabei beispielsweise Schadstoffemissionen als Messgröße gemessen. Je nach Messgröße können am Prüfstand 1 entsprechende Messeinheiten, wie z.B. eine Emissionsmesseinheit 6, welcher Abgas des Verbrennungsmotors zugeführt wird und die bestimmte Schadstoffemissionen, wie CO₂, CO, NOₓ, Gesamtmasse an Kohlenwasserstoffen (THC) und/oder Partikelanzahl (wie Rußpartikel) misst, und/oder eine Verbrauchsmesseinheit 7, die den Kraftstoffverbrauch des Verbrennungsmotors misst, vorgesehen sein.

Simulationseinheit 4 und Steuereinheit ECU können auch als eine Einheit ausgeführt, oder wie in Fig.1 dargestellt, als eigenständige Einheiten ausgeführt sein. Die Referenzeinheit 5 ist in Fig. 1 als eigenständige Einheit ausgeführt, kann aber ebenso mit der Simulationseinheit 4 zusammengeführt sein. Die Simulationseinheit 4 weist Simulationshardware und/oder Simulationssoftware auf, mit welcher die Prüffahrt des Fahrzeugs simuliert wird. Dazu ist in der Simulationseinheit 4 ein Simulationsmodell, welches beispielsweise ein Fahrermodell 11, ein Fahrzeugmodell 12 und ein Streckenmodell 13 umfasst, implementiert. Es können auch weitere Modelle, wie z.B. ein Reifenmodell, ein

Straßenmodell, etc., implementiert sein. Die Simulationseinheit 4 simuliert damit die Fahrt eines virtuellen Fahrzeugs (Fahrzeugmodell 12), das von einem virtuellen Fahrer gesteuert wird (Fahrermodell 11), entlang einer virtuellen Teststrecke (Umgebungsmodell 13), wobei auch bestimmte Ereignisse, wie beispielsweise Verkehrszeichen, Ampeln, Fremdverkehr, usw., simuliert werden können. Ereignisse werden vom virtuellen Fahrer im Fahrermodell 11 wahrgenommen und in Form von entsprechenden Reaktionen umgesetzt werden. Ein Teil des Fahrzeugs, wie der Verbrennungsmotor oder ein Antriebsstrang, ist als reale Hardware am Prüfstand 1 als Prüfling 2 physisch aufgebaut und wird mit den Vorgaben der Simulation gemäß dem Prüfversuch am Prüfstand 1 betrieben. Dieses Vorgehen der Durchführung eines Prüfversuches ist auch hinlänglich bekannt und wird häufig als X-In-The-Loop Prüfung bezeichnet, wobei das "X" für den jeweiligen Prüfling 2, der real vorhanden ist, steht. Diese Art der Durchführung eines Prüfversuchs ist sehr flexibel und kann dem Charakter einer realen Testfahrt mit einem realen Fahrzeug sehr nahe kommen. Es können auch Variationen für Worst-Case-Abschätzungen vorgenommen und evaluiert werden. Variationen können sehr abstrakt definiert werden, z.B. in Form von mehr Fahrzeugmasse, mehr Verkehr, starkem Gegenwind, aggressiverem Fahrverhalten, etc.

Mit dem derart erstellten Prüflauf kann daher die Entwicklung des Fahrzeugs in allen Entwicklungsstadien durchgeführt werden und es kann die Wahrscheinlichkeit der Einhaltung gewisser Vorgaben der Zielgröße, beispielsweise gesetzlicher Grenzwerte der Schadstoffemissionen bei einer Überprüfung mit einer RDE Testprozedur, deutlich erhöht werden. Das gleiche gilt in analoger Weise auch für andere Messgrößen, wie z.B. den Verbrauch, die Fahrbarkeit das akustische Verhalten, die Haltbarkeit, anstelle einer Schadstoffemission.

Der Prüflauf enthält üblicherweise viele verschiedene Fahrmanöver, z.B. eine Beschleunigung, eine Verzögerung, ein Stillstand, eine Konstantfahrt, eine Kurvenfahrt, usw. unter bestimmten Randbedingungen, wie beispielsweise Drehzahl, Drehmoment, Lenkeinschlag, Steigung der Straße, Verkehr, usw., verstanden. Als Fahrmanöver kann ein Anfahren aus dem Stillstand, Beschleunigen aus einer Kurve, Änderung der Fahrzeuggeschwindigkeit, Überholvorgang eines langsamen Fahrzeugs, Ausrollen zu einer roten Ampel, usw., umgesetzt sein. Jede Fahrt eines Fahrzeugs und somit auch ein Prüflauf kann als zeitliche Abfolge solcher Fahrmanöver gesehen werden. Es ist unmittelbar einsichtig, dass es eine Fülle an solchen Fahrmanövern geben kann. Die Fahrmanöver sind in der Referenzeinheit 5 hinterlegt und stammen beispielsweise aus realen vermessenen Testfahrten, aus bereits durchgeführten Simulationen, etc.

Ein Prüflauf wird nun als zeitliche Sequenz solcher Fahrmanöver erstellt. Das kann manuell durch einen Benutzer, durch zufällige Auswahl der Fahrmanöver oder durch eine gezielte Auswahl erfolgen. Die Fahrmanöver müssen natürlich so aneinander gefügt werden müssen, dass es im Prüflauf zu keinen Unstetigkeiten, beispielsweise abrupte Geschwindigkeitssprünge, kommt. Auch muss sichergestellt werden, dass der Prüfling 2 in Kombination mit dem Simulationsmodell den gewünschten Vorgaben folgen kann. Der Prüflauf sollte dabei viele verschiedene Fahrmanöver beinhalten, die vorzugsweise einen größtmöglichen Betriebsbereich (Drehzahl, Drehmoment) des Fahrzeugs abdecken sollen. So kann es genaue Vorgaben geben, welche Manöver zu welchen Anteilen enthalten sein müssen.

Zur Durchführung der Simulation erhält die Simulationseinheit 4 wie erwähnt von der Referenzeinheit 5 eine Anzahl Referenzwerte ref entsprechend des aktuell gewünschten Fahrmanövers im Rahmen des Prüflaufs. Als Referenzwerte ref dienen beispielsweise eine Referenzgeschwindigkeit v_ref und eine Referenzposition s_ref, jeweils als Funktion der Referenzzeit t_ref. Der Simulationseinheit 4 wird somit entsprechend des Prüflaufs eine Referenzgeschwindigkeit v_ref vorgegeben, welche beispielsweise durch das Fahrermodell 11 simuliert wird. Das Fahrermodell 11 folgt also der Referenzgeschwindigkeit v_ref, welche unter Verwendung des Fahrzeugmodells 12 und des Streckenmodells 13 errechnet wird.

Der Prüflauf, bzw. die einzelnen Fahrmanöver sind in der Referenzeinheit 5 als Verlauf der Referenzgeschwindigkeit v_ref über die Referenzzeit t_ref vorgegeben und werden als Referenzwerte ref der Simulationseinheit 4 übermittelt. Die Simulationseinheit 4 versucht im Rahmen der Simulation der Referenzgeschwindigkeit v_ref mit einer Simulationsgeschwindigkeit v_sim zu folgen. Dies kann ortsbasiert (d.h. die Simulationsgeschwindigkeit v_sim zur Simulationsposition s_sim entspricht immer der Referenzgeschwindigkeit v_ref zur Referenzposition s_ref) oder zeitbasiert (d.h. die Simulationsgeschwindigkeit v_sim zur Simulationszeit t_sim entspricht immer der Referenzgeschwindigkeit v_ref zur Referenzzeit t_ref) erfolgen. Da die Simulationsgeschwindigkeit v_sim der Referenzgeschwindigkeit jedoch v_ref nie exakt folgen kann, entsteht dabei eine Zeitabweichung bei einem ortsbasierten Ansatz und eine Positionsabweichung bei einem zeitbasierten Ansatz auf.

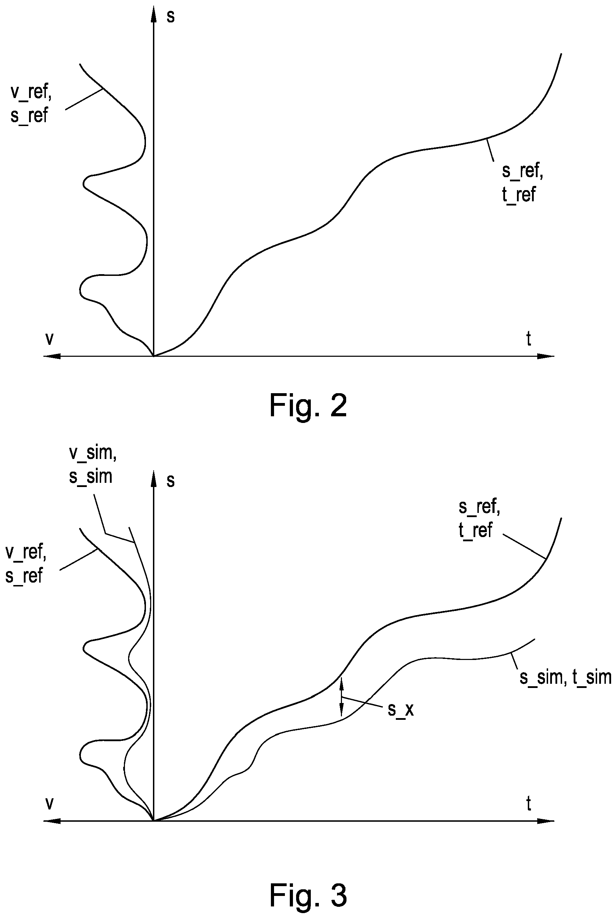

Fig. 2, 3, 4, 6 und 7 zeigen jeweils ein Zeit-Geschwindigkeit-Weg-Diagramm, wobei auf der positiven Abszisse die Zeit t, auf der negativen Abszisse die Geschwindigkeit v und auf der positiven Ordinate die Position s aufgetragen ist. Damit ergibt sich im linken Teil des Diagramms ein Geschwindigkeits-Zeit-Zusammenhang und im rechten Teil des Diagramms ein Weg-Zeit-Zusammenhang.

In Fig. 2 ergibt sich eine Referenzfahrt durch entsprechende Referenzwerte ref: Eine Referenzgeschwindigkeit v_ref ist für jede Referenzzeit t_ref vorgegeben und ebenso ist eine Referenzposition s_ref zu für jede Referenzzeit t_ref vorgegeben, womit jeweils die Referenzkurven gebildet werden: Links eine Referenzgeschwindigkeit v_ref in Abhängigkeit der Referenzposition s_ref und rechts eine Referenzposition s_ref zur Referenzzeit t_ref. Durch diesen Zusammenhang ist ebenso eine Referenzgeschwindigkeit v_ref für jede Referenzzeit t_ref vorgegeben.

Fig. 3 zeigt zusätzlich zu den Referenzwerten ref die Simulationswerte sim einer Simulation, wobei eine zeitbasierte Vorgabe der Simulationsgeschwindigkeit v_sim erfolgt. Damit folgt die Simulationsgeschwindigkeit v_sim zu jedem Zeitpunkt der Simulationszeit t_sim der Referenzgeschwindigkeit v_ref. Da die Simulationsgeschwindigkeit v_sim der Referenzgeschwindigkeit v_ref nicht exakt folgen kann gibt es dennoch eine Geschwindigkeitsabweichung v_x zwischen Simulationsgeschwindigkeit v_sim und Referenzgeschwindigkeit v_ref, wie im linken Quadranten des Graphen ersichtlich ist. Hier ist die Simulationsgeschwindigkeit v_sim zu gering. Dadurch ergibt sich in weiterer Folge als Abweichung x eine Ortsabweichung s_x der Simulationsposition s_sim von der Referenzposition s_ref, wie im rechten Teil des Graphen zu sehen ist.

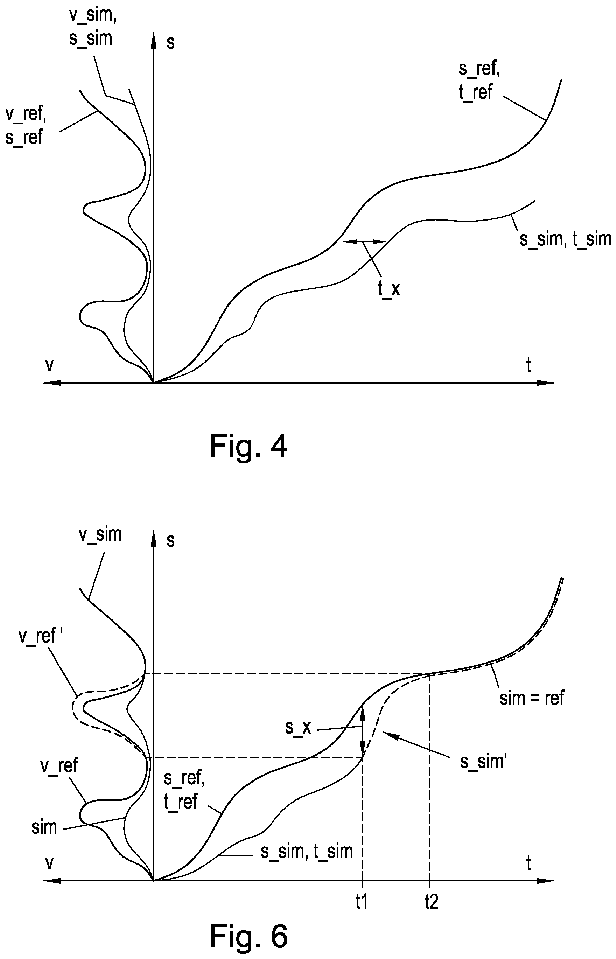

In Fig. 4 ist sind Simulationswerte sim dargestellt, die über eine ortsbasierte Vorgabe der Simulationsgeschwindigkeit v_sim ermittelt werden. Damit folgt die Simulationsgeschwindigkeit v_sim zu jedem Punkt der Simulationsposition s_sim der Referenzposition s_ref. Da die Simulationsgeschwindigkeit v_sim der Referenzgeschwindigkeit v_ref abermals nicht exakt folgen kann, gibt es hier ebenso eine Geschwindigkeitsabweichung v_x zwischen Simulationsgeschwindigkeit v_sim und Referenzgeschwindigkeit v_ref (wieder beispielhaft als zu geringe Simulationsgeschwindigkeit v_sim dargestellt), weshalb sich als Abweichung x eine Zeitabweichung t_x der Simulationszeit t_sim von der Referenzzeit t_ref ergibt.

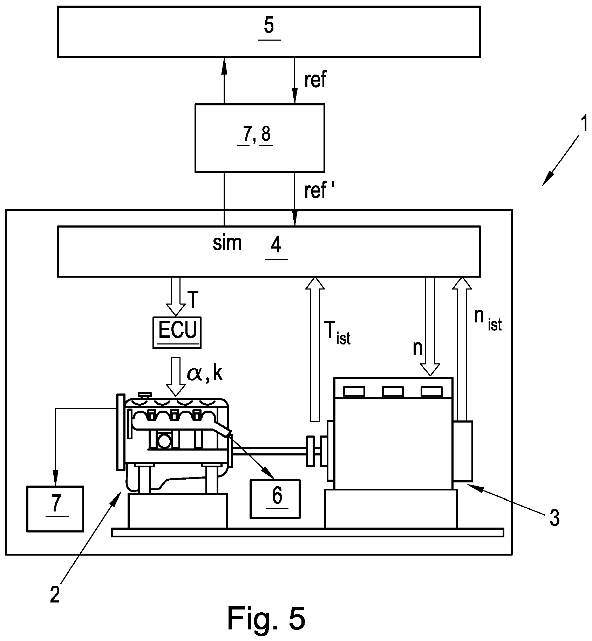

Wie in Fig. 5 ersichtlich ist, ist am Prüfstand 1 erfindungsgemäß eine Detektionseinheit 7 und eine Korrektureinheit 8 vorgesehen, die hier als eine Einheit zwischen die Simulationseinheit 4 und die Referenzeinheit 5 geschaltet sind. Das ist besonders vorteilhaft, weil damit in die Simulationseinheit 4 selbst nicht eingegriffen wird, es müssen lediglich die entsprechenden Simulationswerte sim vorliegen um sie mit den äquivalenten Referenzwerten ref zu vergleichen. In Fig. 5 wird der Detektionseinheit 7 die Simulationsposition s_sim von der Simulationseinheit 4 zugeführt.

Es wird nun mittels einer Detektionseinheit 7 die Abweichung x eines Vergleichssimulationswerts von einem Vergleichsreferenzwerts ermittelt. Hier wird als Abweichung x die Ortsabweichung s_x der Simulationsposition s_sim als Vergleichssimulationswert von der Referenzposition s_ref als Vergleichsreferenzwert ermittelt. Dabei kann natürlich ein(e) Toleranz(band) vorgesehen werden. Daraufhin wird durch die hier vorteilhafterweise in die Detektionseinheit 7 integrierte Korrektureinheit 8 die Referenzgeschwindigkeit v_ref als ausgewählter Referenzwert ref auf die korrigierte Referenzgeschwindigkeit v_ref` geändert, welche daraufhin der Simulationseinheit 4 statt der Referenzgeschwindigkeit v_ref zur Verfügung gestellt wird. Damit wird in der Simulationseinheit 4 im weiteren Verlauf eine korrigierte Simulationsposition s_sim' simuliert, womit sich eine geringere Ortsabweichung s_x ergibt.

In Fig. 6 ist wird zum Zeitpunkt t1 eine Ortsabweichung s_x, hier eine zu geringe Simulationsposition s_sim gegenüber der Referenzposition s_ref, erkannt. Diese Ortsabweichung s_x kann aufgrund an einer zu geringen Simulationsgeschwindigkeit v_sim entstehen, wie es auch in den vorliegenden Figuren angedeutet ist. Gegenüber der Figur 4 ist zu sehen, dass nach dem Zeitpunkt t1 der Simulationseinheit 4 statt der Referenzgeschwindigkeit v_ref (als ausgewählter Referenzwert ref) eine korrigierte Referenzgeschwindigkeit v_ref', die hier höher ist, vorgegeben wird, was durch den strichlierten Abschnitt dargestellt ist. In der Simulationseinheit 4 wird darauf basierend eine höhere Simulationsgeschwindigkeit v_sim simuliert, da diese der nunmehr korrigierten Referenzgeschwindigkeit v_ref` folgt. Der korrigierte Referenzwert ref' (hier also die korrigierte Referenzgeschwindigkeit v_ref') kann dabei weiter kontinuierlich erhöht oder verringert werden.

Es wird dadurch ab dem Zeitpunkt t1 der Simulationseinheit 4 statt der Simulationsgeschwindigkeit v_sim die korrigierte Simulationsgeschwindigkeit v_sim ` vorgegeben und damit die Ortsabweichung s_x reduziert, im dargestellten Fall bis zum Zeitpunkt t2 keine Ortsabweichung s_x mehr auftritt. Danach wird die korrigierte Referenzgeschwindigkeit v_ref` beibehalten, um die Ortsabweichung s_x auf Null zu halten. Damit folgt die Simulationsgeschwindigkeit v_sim in etwa der Referenzgeschwindigkeit v_ref und die Simulationsposition s_sim der Referenzposition s_ref.

Das hat zur Folge, dass die Simulationseinheit 4 unter Verwendung des zumindest einen korrigierten Simulationswert sim' zumindest eine Sollgröße T, die nunmehr korrigiert ist, an die Steuereinheit ECU weitergibt. Die Steuereinheit ECU steuert unter Verwendung dieser zumindest einen Sollgröße T den Prüfling 2 mit zumindest einer Steuergröße, die ebenso korrigiert ist an. Es kann dabei unter Verwendung korrigierten Simulationswerts sim' auch zumindest eine weitere Sollgröße n für die weitere Steuereinheit 30 der Belastungsmaschine 3 ermittelt werden.

Das Verfahren könnte natürlich auch bereits zu Beginn des Prüflaufs gestartet werden und vorzugsweise während dem gesamten Prüflaufs durchgeführt werden. Damit tritt während der Simulation eine geringe Abweichung x auf, da diese vorzugsweise laufend und bestmöglich auskorrigiert wird.

Es muss im vorliegenden Ausführungsbeispiel jedoch für eine Verringerung der Referenzgeschwindigkeit v_ref (als ausgewählter Referenzwert ref) auf eine korrigierte Referenzgeschwindigkeit v_ref` immer sichergestellt werden, dass die Simulationsgeschwindigkeit v_sim eine erste Geschwindigkeitsschwelle, überschreitet. Für eine Erhöhung der Referenzgeschwindigkeit v_ref, muss ebenso sichergestellt werden, dass die Simulationsgeschwindigkeit v_sim die Geschwindigkeitsschwelle, überschreitet. Insbesondere darf hier die Simulationsgeschwindigkeit v_sim nicht Null sein.

Bei geringen Referenzgeschwindigkeiten v_ref und damit auch geringen Simulationsgeschwindigkeiten v_sim ist zudem die Möglichkeit einer Korrektur über eine Anpassung der Referenzgeschwindigkeit v_ref als ausgewählten Referenzwert ref gering, insbesondere wenn die Simulationsposition s_sim größer als die Referenzposition s_ref ist. Da die Referenzgeschwindigkeit v_ref gering ist, kann diese natürlich nicht mehr weit verringert werden, bevor sie Null erreicht.

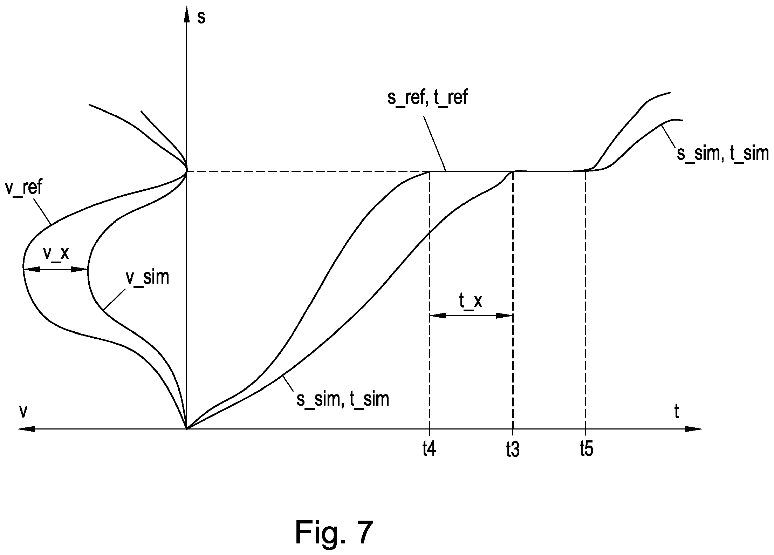

In Fig. 7 wird die Referenzgeschwindigkeit v_ref zum Zeitpunkt t4 Null. Da eine Zeitabweichung t_x auftritt, wird die Simulationsgeschwindigkeit v_sim erst zum Zeitpunkt t3 Null. Damit wird die Geschwindigkeitsschwelle (von Null) zum Zeitpunkt t3 von der Simulationsgeschwindigkeit v_sim erreicht, womit die Geschwindigkeitsschwelle nicht mehr überschritten wird, was vorzugsweise von der Detektionseinheit 7 erkannt wird. Es wird somit, vorzugsweise von der Korrektureinheit 8, die von der Referenzzeit t_ref abweichende Simulationszeit t_sim verändert. Zum Zeitpunkt t5 wird die Referenzgeschwindigkeit v_ref und damit die Simulationsgeschwindigkeit v_sim wieder erhöht. Damit diese Zeitpunkte wieder synchron sind, wird die Dauer, in der die Simulationsgeschwindigkeit v_sim Null ist, reduziert. Lt. Referenz müsste die Stoppdauer von t4 bis t5 andauern, in der Simulation wurde die Stoppdauer auf t3 bis t5 reduziert. Die Änderung der Simulationszeit t_sim kann auch als schnelleres oder langsameres Ablaufen der Simulationszeit t_sim bzw. der Referenzzeit t_ref im geänderten Bereich der Simulationszeit t_sim angesehen werden.

## Patentansprüche

1. Verfahren zum Durchführen eines Prüflaufs auf einem Prüfstand (1) mit einem Prüfling (2) wobei einer Simulationseinheit (4) von einer Referenzeinheit (5) eine Anzahl Referenzwerte (ref) vorgegeben wird, wobei durch die Simulationseinheit (4) unter Verwendung der Anzahl Referenzwerte (ref) eine Anzahl Simulationswerte (sim) simuliert wird, wobei aus der Anzahl Simulationswerte (sim) zumindest eine Sollgröße (T) und weiter zumindest eine Steuergröße zum Steuern des Prüflings (2) ermittelt wird, **dadurch gekennzeichnet, dass** von einer Detektionseinheit (7) eine Abweichung (x) eines Vergleichssimulationswerts aus der Anzahl Simulationswerte (sim) von einem Vergleichsreferenzwert aus der Anzahl Referenzwerte (ref), vorzugsweise um eine Toleranz, festgestellt wird, wobei der Vergleichsreferenzwert zum Vergleichssimulationswert äquivalent ist, dass bei einer festgestellten Abweichung (x) von einer Korrektureinheit (8) ausgehend von einem ausgewählten Referenzwert (ref)aus der Anzahl Referenzwerte ein korrigierter Referenzwert (ref') ermittelt wird, wobei der ausgewählte Referenzwert (ref) nicht dem Vergleichsreferenzwert entspricht, und wobei der korrigierte Referenzwert (ref`) in Abhängigkeit von der festgestellten Abweichung (x) gegenüber dem ausgewählten Referenzwert (ref) vergrößert oder verringert wird, **dass** der Simulationseinheit (4) statt dem ausgewählten Referenzwert (ref) der korrigierte Referenzwert (ref`) zur Simulation eines korrigierten Simulationswerts (sim`) vorgegeben wird, **und dass** die zumindest eine Sollgröße (T) unter Verwendung des korrigierten Simulationswerts (sim`) ermittelt wird.

2. Verfahren nach Anspruch 1, **dadurch gekennzeichnet, dass** zumindest eine weitere Sollgröße (n) für zumindest eine mit dem Prüfling (2) verbundene Belastungsmaschine (3) unter Verwendung des zumindest einen korrigierten Simulationswerts (sim`) ermittelt wird.

3. Verfahren nach Anspruch 1 oder 2, **dadurch gekennzeichnet, dass** der korrigierte Referenzwert (ref`) kontinuierlich erhöht oder verringert wird.

4. Verfahren nach einem der Ansprüche 1 bis 3, **dadurch gekennzeichnet, dass** der korrigierte Referenzwert (ref`) erhöht oder verringert wird, bis keine Abweichung (x) mehr auftritt.

5. Verfahren nach einem der Ansprüche 1 bis 4, **dadurch gekennzeichnet, dass** das Verfahren zu Beginn des Prüflaufs gestartet wird.

6. Verfahren nach Anspruch 5, **dadurch gekennzeichnet, dass** das Verfahren während dem gesamten Prüflaufs durchgeführt wird.

7. Verfahren nach einem der Ansprüche 1 bis 6, **dadurch gekennzeichnet, dass** die Anzahl Referenzwerte (ref) eine Referenzposition (s_ref) zu einer Referenzzeit (t_ref) und eine Referenzgeschwindigkeit (v_ref) zur Referenzzeit (t_ref) umfasst, **dass** die von der Simulationseinheit (4) simulierte Anzahl Simulationswerte (sim) eine Simulationsgeschwindigkeit (v_sim) zu einer Simulationszeit (t_sim) und eine Simulationsposition (s_sim) zur Simulationszeit (t_ref) umfasst.

8. Verfahren nach Anspruch 7, **dadurch gekennzeichnet, dass** die Simulationsposition (s_sim) als Vergleichssimulationswert dient, die Referenzposition (s_ref) als Vergleichsreferenzwert dient und die Referenzgeschwindigkeit (v_ref) als ausgewählter Referenzwert (ref) dient.

9. Verfahren nach Anspruch 8, **dadurch gekennzeichnet, dass** der Simulationseinheit (4) eine korrigierte Referenzgeschwindigkeit (v_ref`), die geringer als die Referenzgeschwindigkeit (v_ref) ist, vorgegeben wird, wenn die Simulationsposition (s_sim) größer als die Referenzposition (s_ref) ist und die Simulations-Geschwindigkeit (v_sim) eine Geschwindigkeitsschwelle, vorzugsweise Null, überschreitet.

10. Verfahren nach Anspruch 8, **dadurch gekennzeichnet, dass** der Simulationseinheit (4) eine korrigierte Referenzgeschwindigkeit (v_ref`), die größer als die Referenzgeschwindigkeit (v_ref) ist, vorgegeben wird, wenn die Simulationsposition (s_sim) kleiner als die Referenzposition (s_ref) ist und die Simulations-Geschwindigkeit (v_sim) eine Geschwindigkeitsschwelle, vorzugsweise Null, überschreitet.

11. Verfahren nach Anspruch 9 oder 10, **dadurch gekennzeichnet, dass** die Simulationszeit (t_sim) auf eine korrigierte Simulationszeit (t_sim') verändert wird, wenn sie von der Referenzzeit (t_ref) abweicht und die Simulationsgeschwindigkeit (v_sim) die Geschwindigkeitsschwelle, vorzugsweise Null, nicht überschreitet.

12. Prüfstand (1) mit einem Prüfling (2) zum Durchführen eines Prüflaufs, wobei eine Referenzeinheit (5) vorgesehen ist, die einer Simulationseinheit (4) eine Anzahl Referenzwerte (ref) vorgibt, wobei die Simulationseinheit (4) ausgestaltet ist unter Verwendung der Anzahl Referenzwerte (ref) eine Anzahl Simulationswerte (sim) zu simulieren und aus der Anzahl Simulationswerte (sim) zumindest eine Sollgröße (T) zu ermitteln und an eine Steuereinheit (ECU) zu übermitteln, wobei die Steuereinheit (ECU) ausgestaltet ist basierend auf der zumindest einen Sollgröße (T) zumindest eine Steuergröße zum Steuern des Prüflings (2) vorzugeben, **dadurch gekennzeichnet, dass** eine Detektionseinheit (7) vorgesehen ist, die ausgestaltet ist eine Abweichung (x) eines Vergleichssimulationswerts (sim) aus der Anzahl Simulationswerte (sim) von einem Vergleichsreferenzwert aus der Anzahl Referenzwerte (ref), vorzugsweise um eine Toleranz, festzustellen, **und dass** eine Korrektureinheit (8) vorgesehen ist, die ausgestaltet ist, bei einer festgestellten Abweichung (x) ausgehend von einem ausgewählten Referenzwert (ref) aus der Anzahl Referenzwerte einen korrigierten Referenzwert (ref`) zu ermitteln, wobei der ausgewählte Referenzwert (ref) nicht dem Vergleichsreferenzwert entspricht, und wobei der korrigierte Referenzwert (ref`) in Abhängigkeit von der festgestellten Abweichung (x) gegenüber dem ausgewählten Referenzwert (ref) vergrößert oder verringert ist, und der Simulationseinheit (4) statt dem ausgewählten Referenzwert (ref) zur Simulation eines korrigierten Simulationswerts (sim`) vorzugeben, um die zumindest eine Sollgröße (T) unter Verwendung des korrigierten Simulationswert (sim`) zu ermitteln.

## Claims

1. Method for carrying out a test run on a test stand (1) with a test object (2), wherein a number of reference values (ref) is specified to a simulation unit (4) by a reference unit (5), wherein a number of simulation values (sim) is simulated by the simulation unit (4) using the number of reference values (ref), wherein at least one setpoint variable (T) and at least one control variable for controlling the test object (2) are determined from the number of simulation values (sim), **characterized in that** a deviation (x) between a comparison simulation value from the number of simulation values (sim) and a comparison reference value from the number of reference values (ref), preferably by a tolerance, is detected by a detection unit (7), wherein the comparison reference value is equivalent to the comparison simulation value, **in that,** when a deviation (x) is detected, starting from a selected reference value (ref) from the number of reference values, a corrected reference value (ref`) is determined by a correction unit (8), wherein the selected reference value (ref) does not correspond to the comparison reference value, and wherein the corrected reference value (ref') is increased or decreased as a function of the detected deviation (x) form the selected reference value (ref), **in that,** instead of the selected reference value (ref), the corrected reference value (ref`) is specified to the simulation unit (4) for simulating a corrected simulation value (sim`), **and in that** the at least one setpoint variable (T) is determined using the corrected simulation value (sim`).

2. Method according to claim 1, **characterized in that** at least one further setpoint variable (n) is determined for at least one loading machine (3) connected to the test object (2) using the at least one corrected simulation value (sim`).

3. Method according to either claim 1 or claim 2, **characterized in that** the corrected reference value (ref`) is continuously increased or decreased.

4. Method according to any of claims 1 to 3, **characterized in that** the corrected reference value (ref`) is increased or decreased until no more deviation (x) occurs.

5. Method according to any of claims 1 to 4, **characterized in that** the method is started at the beginning of the test run.

6. Method according to claim 5, **characterized in that** the method is carried out during the entire test run.

7. Method according to any of claims 1 to 6, **characterized in that** the number of reference values (ref) comprises a reference position (s_ref) at a reference time (t_ref) and a reference speed (v_ref) at the reference time (t_ref), **in that** the number of simulation values (sim) simulated by the simulation unit (4) comprises a simulation speed (v_sim) at a simulation time (t_sim) and a simulation position (s_sim) at the simulation time (t_ref).

8. Method according to claim 7, **characterized in that** the simulation position (s_sim) serves as a comparison simulation value, the reference position (s_ref) serves as a comparison reference value, and the reference speed (v_ref) serves as the selected reference value (ref).

9. Method according to claim 8, **characterized in that** a corrected reference speed (v_ref') that is lower than the reference speed (v_ref) is specified to the simulation unit (4), if the simulation position (s_sim) is greater than the reference position (s_ref) and the simulation speed (v_sim) exceeds a speed threshold, preferably zero.

10. Method according to claim 8, **characterized in that** a corrected reference speed (v_ref') that is greater than the reference speed (v_ref) is specified to the simulation unit (4), if the simulation position (s_sim) is smaller than the reference position (s_ref) and the simulation speed (v_sim) exceeds a speed threshold, preferably zero.

11. Method according to either claim 9 or claim 10, **characterized in that** the simulation time (t_sim) is changed to a corrected simulation time (t_sim'), if it deviates from the reference time (t_ref) and the simulation speed (v_sim) does not exceed the speed threshold, preferably zero.

12. Test stand (1) with a test object (2) for carrying out a test run, wherein a reference unit (5) is provided which specifies a number of reference values (ref) to a simulation unit (4), wherein the simulation unit (4) is designed to simulate a number of simulation values (sim) using the number of reference values (ref) and to determine at least one setpoint variable (T) from the number of simulation values (sim) and to transmit it to a control unit (ECU), wherein the control unit (ECU) is designed to specify at least one control variable for controlling the test object (2) based on the at least one setpoint variable (T), **characterized in that** a detection unit (7) is provided, which is designed to detect a deviation (x) between a comparison simulation value (sim) from the number of simulation values (sim) and a comparison reference value from the number of reference values (ref), preferably by a tolerance, **and in that** a correction unit (8) is provided, which is designed, to determine a corrected reference value (ref`) starting from a selected reference value (ref) from the number of reference values, when a deviation (x) is detected, wherein the selected reference value (ref) does not correspond to the comparison reference value, and wherein the corrected reference value (ref') is increased or decreased as a function of the detected deviation (x) form the selected reference value (ref), and to specify the corrected reference value instead of the selected reference value (ref) to the simulation unit (4) for simulating a corrected simulation value (sim`), to determine the at least one using the corrected simulation value (sim`).

## Revendications

1. Procédé permettant de réaliser un essai sur un banc d'essai (1) comportant un échantillon d'essai (2), dans lequel un certain nombre de valeurs de référence (ref) sont fournies à une unité de simulation (4) par une unité de référence (5), dans lequel un certain nombre de valeurs de simulation (sim) sont simulées par l'unité de simulation (4) en utilisant le nombre de valeurs de référence (ref), dans lequel au moins une grandeur cible (T) et en outre au moins une grandeur de commande pour la commande de l'échantillon d'essai (2) sont déterminées à partir du nombre de valeurs de
simulation (sim),**caractérisé en ce qu'**un écart (x) entre une valeur de simulation de comparaison parmi le nombre de valeurs de simulation (sim) et une valeur de référence de comparaison parmi le nombre de valeurs de référence (ref), de préférence d'une tolérance, est défini par une unité de détection (7), dans lequel la valeur de référence de comparaison est équivalente à la valeur de simulation de comparaison, **en ce qu'**en cas d'écart (x) défini, une valeur de référence corrigée (ref') est déterminée par une unité de correction (8) à partir d'une valeur de référence (ref) sélectionnée parmi le nombre de valeurs de référence, dans lequel la valeur de référence (ref) sélectionnée ne correspond pas à la valeur de référence de comparaison, et dans lequel la valeur de référence corrigée (ref') est augmentée ou diminuée en fonction de l'écart (x) défini par rapport à la valeur de référence (ref) sélectionnée, **en ce que** la valeur de référence corrigée (ref') est fournie à l'unité de simulation (4) à la place de la valeur de référence (ref) sélectionnée pour la simulation d'une valeur de simulation corrigée (sim'),
**et en ce que** l'au moins une grandeur cible (T) est déterminée en utilisant la valeur de simulation corrigée (sim').

2. Procédé selon la revendication 1, **caractérisé en ce qu'**au moins une autre grandeur cible (n) est déterminée pour au moins une machine de chargement (3) reliée à l'échantillon d'essai (2) en utilisant l'au moins une valeur de simulation corrigée (sim').

3. Procédé selon la revendication 1 ou 2, **caractérisé en ce que** la valeur de référence corrigée (ref') est augmentée ou diminuée en continu.

4. Procédé selon l'une des revendications 1 à 3, **caractérisé en ce que** la valeur de référence corrigée (ref') est augmentée ou diminuée jusqu'à ce qu'il n'y ait plus d'écart (x).

5. Procédé selon l'une des revendications 1 à 4, **caractérisé en ce que** le procédé commence au début de l'essai.

6. Procédé selon la revendication 5, **caractérisé en ce que** le procédé est réalisé pendant toute la durée de l'essai.

7. Procédé selon l'une des revendications 1 à 6, **caractérisé en ce que** le nombre de valeurs de référence (ref) comprend une position de référence (s_ref) à un temps de référence (t_ref) et une vitesse de référence (v_ref) au temps de référence (t_ref), **en ce que** le nombre de valeurs de simulation (sim) simulées par l'unité de simulation (4) comprend une vitesse de simulation (v_sim) à un temps de simulation (t_sim) et une position de simulation (s_sim) au temps de simulation (t_ref).

8. Procédé selon la revendication 7, **caractérisé en ce que** la position de simulation (s_sim) sert de valeur de simulation de comparaison, la position de référence (s_ref) sert de valeur de référence de comparaison et la vitesse de référence (v_ref) sert de valeur de référence (ref) sélectionnée.

9. Procédé selon la revendication 8, **caractérisé en ce qu'**une vitesse de référence corrigée (v_ref') inférieure à la vitesse de référence (v_ref) est fournie à l'unité de simulation (4) si la position de simulation (s_sim) est supérieure à la position de référence (s_ref) et la vitesse de simulation (v_sim) dépasse un seuil de vitesse, de préférence nul.

10. Procédé selon la revendication 8, **caractérisé en ce qu'**une vitesse de référence corrigée (v_ref') supérieure à la vitesse de référence (v_ref) est fournie à l'unité de simulation (4) si la position de simulation (s_sim) est inférieure à la position de référence (s_ref) et la vitesse de simulation (v_sim) dépasse un seuil de vitesse, de préférence nul.

11. Procédé selon la revendication 9 ou 10, **caractérisé en ce que** le temps de simulation (t_sim) est remplacé par un temps de simulation corrigé (t_sim') s'il s'écarte du temps de référence (t_ref) et la vitesse de simulation (v_sim) ne dépasse pas le seuil de vitesse, de préférence nul.

12. Banc d'essai (1) comportant un échantillon d'essai (2) pour la réalisation d'un essai, dans lequel une unité de référence (5) est prévue, laquelle fournit un certain nombre de valeurs de référence (ref) à une unité de simulation (4), dans lequel l'unité de simulation (4) est configurée pour simuler un certain nombre de valeurs de simulation (sim) en utilisant le nombre de valeurs de référence (ref) et pour déterminer au moins une grandeur cible (T) à partir du nombre de valeurs de simulation (sim) et pour le transmettre à une unité de commande (ECU), dans lequel l'unité de commande (ECU) est configurée pour fournir au moins une grandeur de commande pour la commande de l'échantillon d'essai (2) sur la base de l'au moins une grandeur cible (T),**caractérisé en ce qu'**une unité de détection (7) est prévue, laquelle est configurée pour définir un écart (x) entre une valeur de simulation de comparaison (sim) parmi le nombre de valeurs de simulation (sim) et une valeur de référence de comparaison parmi le nombre de valeurs de référence (ref), de préférence d'une tolérance, **et en ce qu'**une unité de correction (8) est prévue, laquelle est configurée pour, en cas d'écart (x) défini, déterminer une valeur de référence corrigée (ref') à partir d'une valeur de référence (ref) sélectionnée parmi le nombre de valeurs de référence, dans lequel la valeur de référence (ref) sélectionnée ne correspond pas à la valeur de référence de comparaison, et dans lequel la valeur de référence corrigée (ref') est augmentée ou diminuée en fonction de l'écart (x) défini par rapport à la valeur de référence (ref) sélectionnée, et pour fournir à l'unité de simulation (4) ladite valeur de référence corrigée au lieu de la valeur de référence (ref) sélectionnée pour la simulation d'une valeur de simulation corrigée (sim`) afin de déterminer l'au moins une grandeur cible (T) en utilisant la valeur de simulation corrigée (sim').
